# EUROPÄISCHE PATENTSCHRIFT

(11) **EP 2 720 909 B1**
(45) Veröffentlichungstag und Bekanntmachung des Hinweises auf die Patenterteilung: **10.08.2016**
(21) Anmeldenummer: 12730195.0
(22) Anmeldetag: 19.06.2012
(51) Int. Cl.: B60R 19/48, G01S 7/521, G10K 9/22

(54) **ULTRASCHALLSENSORVORRICHTUNG FÜR EIN FAHRZEUG SOWIE ANORDNUNG MIT EINER ULTRASCHALLSENSORVORRICHTUNG**
ULTRASOUND APPARATUS FOR A VEHICLE AND ARRANGEMENT WITH AN ULTRASOUND APPARATUS
APPAREIL DE DÉTECTION À ULTRASONS POUR UN VÉHICULE ET DISPOSITIF COMPORTANT UN APPAREIL DE DÉTECTION À ULTRASONS

(30) Priorität: 20.06.2011 DE 102011105013
(43) Veröffentlichungstag der Anmeldung: 23.04.2014
(73) Patentinhaber: Valeo Schalter und Sensoren GmbH, 74319 Bietigheim-Bissingen (DE); Volkswagen Aktiengesellschaft, 38440 Wolfsburg (DE)
(72) Erfinder: WEHLING, Hans-Wilhelm, 74074 Heilbronn (DE); WEYLAND, Jörg, 74336 Brackenheim (DE); WEBER, Natalie, 74321 Bietigheim-Bissingen (DE); MAX, Stephan, 38518 Gifhorn (DE)
(74) Vertreter: Hofstetter, Schurack & Partner
(86) Internationale Anmeldenummer: PCT/EP2012/061670
(87) Internationale Veröffentlichungsnummer: WO 2012/175479

(56) Entgegenhaltungen:
- DE-A1- 4 238 924
- DE-A1- 19 601 987

## Beschreibung

Die Erfindung betrifft eine Ultraschallsensorvorrichtung für ein Fahrzeug, mit einem Ultraschallsensor und einem den Ultraschallsensor in seiner Schwingungsübertragung begrenzenden Schwingungsbegrenzungsring. Darüber hinaus betrifft die Erfindung auch eine Anordnung mit einer derartigen Ultraschallsensorvorrichtung.

Es ist bekannt, dass Ultraschallsensoren an Stoßfängern des Fahrzeugs verbaut werden. Dabei ist ein sichtbarer Verbau bekannt. Bei diesem weisen die Stoßfänger Durchbrechungen auf, durch welche sich die Ultraschallsensoren erstrecken und frei nach außen liegend senden und empfangen. Dies ist beispielsweise in der DE 196 01 987 A1 gezeigt.

Darüber hinaus ist jedoch auch eine verdeckte Bauweise derartiger Ultraschallsensoren an Stoßfängern bekannt. Dabei werden die Ultraschallsensoren hinter dem Stoßfänger angeordnet und frontseitig vollständig durch den Stoßfänger bzw. dessen Material verdeckt. Aufgrund der direkten Befestigung der Ultraschallsensorvorrichtung an der Innenseite des Stoßfängers ist dieser quasi auch direkt an den Stoßfänger gekoppelt und der komplette Ultraschall geht über den Stoßfänger nach außen. Dadurch wird auch der ganze Stoßfänger mit dieser Schwingung beaufschlagt. Dadurch entstehen Scheinechos und Störungsschwingungen, die bei der Messung der Senderichtcharakteristik stark auffallen. Gerade dann, wenn mehrere derartige Sensoren an einem Stoßfänger verbaut sind, werden diese aufgrund dieser Schwingungsübertragung auf den Stoßfänger gegenseitig beeinträchtigt und stören sich.

Um die Schwingungen im Stoßfänger und somit den Körperschall lokal zu begrenzen, ist es aus der DE 42 38 924 A1, die den Oberbegriff des Anspruchs 1 bildet, bekannt, dass die verdeckt verbauten Ultraschallsensoren ein Begrenzungsring in Ultraschallsensor umgibt, mittels dem die Schwingungsübertragung auf den Stoßfänger lokal begrenzt wird. Zwischen diesem Begrenzungsring und dem Ultraschallsensor ist darüber hinaus ein Entkopplungsring aus einem weichen Material ausgebildet.

Bei der bekannten Ausgestaltung ist jedoch vorgesehen, dass der Begrenzungsring kreisrundförmig ausgebildet ist und auch das innenliegende Loch kreisrund ist.

Es ist Aufgabe der vorliegenden Erfindung, eine Ultraschallsensorvorrichtung und eine Anordnung mit einer derartigen Ultraschallsensorvorrichtung zu schaffen, mittels welcher zum einen die Schwingungsübertragung des Ultraschallsensors auf ein Verkleidungsteil begrenzt wird und darüber hinaus die Abstrahlcharakteristik des Ultraschallsensors definiert beeinflussbar ist.

Diese Aufgabe wird durch eine Ultraschallsensorvorrichtung und eine Anordnung gemäß den unabhängigen Ansprüchen gelöst.

Eine erfindungsgemäße Ultraschallsensorvorrichtung für ein Fahrzeug umfasst zumindest einen Ultraschallsensor. Sie umfasst darüber hinaus auch einen Schwingungsbegrenzungsring, der den Ultraschallsensor umgibt und diesen in seiner Schwingungsübertragung begrenzt. Durch den Schwingungsbegrenzungsring wird die Übertragung der Ultraschallschwingung auf ein Verkleidungsteil, an dem die Ultraschallsensorvorrichtung anbringbar ist, gezielt lokal begrenzt und es wird nicht mehr der gesamte Stoßfänger zur Schwingung angeregt bzw. die Ausbreitung der Schwingung über den Stoßfänger so stark gedämpft, dass andere Ultraschallsensoren am Stoßfänger dadurch nicht gestört werden.

Der Schwingungsbegrenzungsring weist eine zu seiner Außenkontur unterschiedliche Innenkontur auf. Durch diese individuelle Konturengestaltung kann nicht nur eine Schwingungsbegrenzung erfolgen, sondern auch die Abstrahlrichtcharakteristik des Ultraschallsensors definiert beeinflusst werden. Durch den Schwingungsbegrenzungsring wird somit ein einziges Bauteil geschaffen, welches somit multifunktionell ausgebildet ist.

Vorzugsweise ist vorgesehen, dass der Schwingungsbegrenzungsring eine eckenfreie Innenkontur aufweist, die unterschiedliche Ausmaße in zwei senkrecht zueinander stehenden Achsen aufweist.

Die beiden senkrecht zueinander stehenden Achsen erstrecken sich in der Ebene des Schwingungsbegrenzungsrings.

Im Hinblick auf eine eckenfreie Innenkontur kann somit eine ovalartige Ausgestaltung vorgesehen sein. Auch anderweitige eckenfreie Innenkonturen mit einer Vielzahl von radialen Ausbuchtungen kann realisiert sein. Die Radien dieser Ausbuchtungen können insbesondere unterschiedlich sein.

Es kann auch vorgesehen sein, dass der Schwingungsbegrenzungsring eine eckige Innenkontur aufweist, die vorzugsweise unterschiedliche Ausmaße in zwei senkrecht zueinander stehenden Achsen aufweist. Beispielsweise kann hier eine viereckige Innenkontur vorgesehen sein. Diese kann rechteckig sein oder auch quadratisch. Es kann jedoch auch eine darüber hinausgehende eckige Struktur vorgesehen sein, die beispielsweise drei Ecken oder fünf Ecken und mehr aufweisen kann.

Durch diese unterschiedlichen Konturen kann in sehr gezielter und definierter Weise die Abstrahlcharakteristik des Ultraschallsensors begrenzt werden.

Vorzugsweise ist vorgesehen, dass der Schwingungsbegrenzungsring eine kreisrunde Außenkontur aufweist. Durch die Ausgestaltung kann der Schwingungsbegrenzungsring möglichst kompakt und an seiner Außenkontur rotationssymmetrisch ausgestaltet werden.

Erfindungsgemäß variiert die Innenkontur über die Dicke des Schwingungsbegrenzungsrings. Für eine derartige Ausgestaltung wird eine Aufnahme des Ultraschallsensors in dem Loch des Schwingungsbegrenzungsrings ermöglicht, andererseits werden die Schwingungsbegrenzung und die Abstrahlbegrenzung besonders effektiv erreicht.

Erfindungsgemäß weist die Innenkontur auf einer dem Ultraschallsensor zugewandten hinteren Seite eine der Außenkontur des Ultraschallsensors angepasste erste Innenkontur auf, die über die Dicke des Schwingungsbegrenzungsrings betrachtet in die auf einer vorderen Seite des Schwingungsbegrenzungsrings ausgebildete zweite Innenkontur übergeht, wobei die zweite Innenkontur unterschiedlich zur Außenkontur ist. Dadurch wird quasi auf der einen Seite des Schwingungsbegrenzungsrings eine besonders vorteilhafte Aufnahme zur Hineinführung des Ultraschallsensors erzielt, auf der anderen Seite eine besonders angepasste Geometrie der Innenkontur bezüglich der Begrenzung der Abstrahlcharakteristik erzielt. Dies wird alles in einem sehr flach bauenden und einzigen Bauteil, nämlich dem Schwingungsbegrenzungsring ausgebildet. Vorzugsweise ist die Innenkontur an der hinteren Seite so ausgestaltet, dass zwischen den sich hineinerstreckenden Ultraschallsensor und der ersten Innenkontur Bauraum frei bleibt, in den ein Entkopplungsring einbringbar ist. Vorzugsweise ist dann vorgesehen, dass der Ultraschallsensor mit dem Entkopplungsring passgenau in diese erste Innenkontur einsetzbar ist.

Vorzugsweise ist eine hintere Seite des Schwingungsbegrenzungsrings eben ausgebildet.

Vorzugsweise ist eine vordere Seite des Schwingungsbegrenzungsrings zumindest teilweise in radialer Richtung geneigt, insbesondere nach außen abfallend ausgebildet. In radialer Richtung betrachtet verjüngt sich somit der Schwingungsbegrenzungsring nach außen hin. Dies ist insbesondere eine vorteilhafte Ausführung dann, wenn die Innenseite des Verkleidungsteils, an dem die Ultraschallsensorvorrichtung angeordnet ist, im Bereich der Anbringung nicht eben, sondern eine gewisse Wölbung aufweist. Durch diese spezifische Ausgestaltung des Schwingungsbegrenzungsrings kann eine möglichst nahe und vollflächige Anbringung des Schwingungsbegrenzungsrings an der Innenseite erzielt werden, sodass eine hervorzuhebende Befestigung erzielt werden kann und eine sehr bauraumminimierende Ausgestaltung hinter dem Verkleidungsteil erzielt ist.

Vorzugsweise ist zwischen dem Schwingungsbegrenzungsring und dem Ultraschallsensor ein bereits angesprochener Entkopplungsring angeordnet. Dieser kann aus einem weichelastischen Material, wie beispielsweise Silikon, ausgebildet sein.

Der Schwingungsbegrenzungsring ist vorzugsweise aus einem härteren und steifen Material und kann insbesondere aus Keramik ausgebildet sein.

Vorzugsweise ist vorgesehen, dass eine erfindungsgemäße Anordnung eine erfindungsgemäße Ultraschallsensorvorrichtung oder eine vorteilhafte Ausgestaltung davon aufweist. Die Anordnung fasst darüber hinaus ein Verkleidungsteil, insbesondere einen Stoßfänger, an dessen Innenseite die Ultraschallsensorvorrichtung durch das Verkleidungsteil verdeckt verbaut befestigt ist. Die verdeckte Verbauung bedeutet in diesem Zusammenhang, dass die Ultraschallsensorvorrichtung frontseitig vollständig durch das Verkleidungsteil verdeckt ist und der Ultraschallsensor durch das Material des Verkleidungsteils hindurch sendet und empfängt.

Der Schwingungsbegrenzungsring ist insbesondere direkt an der Innenseite des Verkleidungsteils befestigt, insbesondere angeklebt. Durch die Erfindung wird erreicht, dass die Schwingungen der Membran des Ultraschallsensors nicht großflächig durch Körperschall an das Verkleidungsteil abgegeben werden und diese auch nicht mit einer zeitlichen Verzögerung in die Membran zurückgeleitet werden. Durch den Schwingungsbegrenzungsring, der um den Sensor, insbesondere die Membran des Sensors herumplatziert ist, kann diese Begrenzung der Schwingungsübertragung auf einen nur lokalen Bereich des Stoßfängers vor dem Ultraschallsensor erfolgen und darüber hinaus zugleich auch durch die unterschiedliche Innenkontur die Abstrahlcharakteristik definiert werden.

Durch die Massenträgheit und Steifigkeit der anliegenden Flächengröße des Schwingungsbegrenzungsrings am Verkleidungsteil sowie durch die Kontaktierungsart über den Schwingungsbegrenzungsring mit dem Verkleidungsteil durch die Geometrie vom Schwingungsbegrenzungsring um die Membran wird die Schwingung in dem Stoßfänger erheblich reduziert und die Funktion des hinterklebten Ultraschallsensors in Bezug der Senderichtcharakteristik verbessert.

Der Stabilisierungsring bzw. Schwingungsbegrenzungsring kann unterschiedliche Geometrien und Dicken aufweisen. Besonders vorteilhaft ist es dabei, dass das Material des Schwingungsbegrenzungsrings ein hohes E-Modul besitzt, um das Überkoppeln von größeren mechanischen Schwingungen in das Verkleidungsteil zu verhindern. Der Schwingungsbegrenzungsring kann Teil einer Gesamtkonstruktion sein, oder als Einzelteil ausgebildet sein. Er stellt auch wesentliches Bauteil dar, um den Wandler bzw. den Ultraschallsensor hinter dem Verkleidungsteil kraftschlüssig anbringen zu können. Durch eine derartige spezifische Ausgestaltung des Schwingungsbegrenzungsrings können die Nebenkeulen des Schallfelds und die Störungsschwingungen unterbunden werden.

Weitere Merkmale der Erfindung ergeben sich aus den Ansprüchen, den Figuren und der Figurenbeschreibung. Die vorstehend in der Beschreibung genannten Merkmale und Merkmalskombinationen als auch die nur in den Figuren alleine gezeigten und/oder nur in der Figurenbeschreibung genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden nachfolgend anhand schematischer Zeichnungen näher erläutert. Es zeigen:
- Fig. 1: eine Schnittdarstellung durch ein erstes Ausführungsbeispiel einer erfindungsgemäßen Anordnung;
- Fig. 2: eine Schnittdarstellung durch ein zweites Ausführungsbeispiel einer erfindungsgemäßen Anordnung;
- Fig. 3: eine Ansicht auf die hintere Seite eines Schwingungsbegrenzungsrings gemäß einem ersten Ausführungsbeispiel;
- Fig. 4: eine Ansicht auf die vordere Seite des Schwingungsbegrenzungsrings gemäß Fig. 3;
- Fig. 5: eine Schnittdarstellung des Schwingungsbegrenzungsrings gemäß Fig. 3 und Fig. 4;
- Fig. 6: eine Ansicht auf eine vordere Seite eines Schwingungsbegrenzungsrings gemäß einem weiteren Ausführungsbeispiel;
- Fig. 7: eine Ansicht auf eine vordere Seite eines Schwingungsbegrenzungsrings gemäß einem weiteren Ausführungsbeispiel;
- Fig. 8: eine Ansicht auf eine vordere Seite eines Schwingungsbegrenzungsrings gemäß einem weiteren Ausführungsbeispiel; und
- Fig. 9: eine Ansicht auf eine vordere Seite eines Schwingungsbegrenzungsrings gemäß einem nochmaligen weiteren Ausführungsbeispiel.

In den Figuren werden gleiche oder funktionsgleiche Elemente mit den gleichen Bezugszeichen versehen.

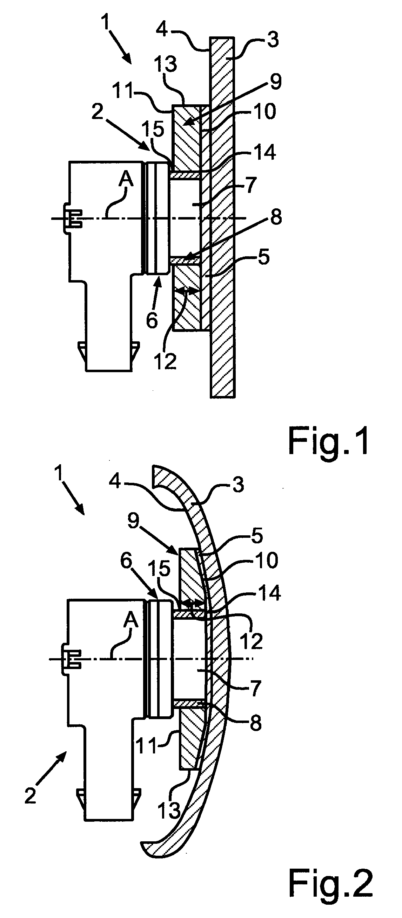

In Fig. 1 ist in einer schematischen Schnittdarstellung eine Anordnung 1 gezeigt, welche eine Ultraschallsensorvorrichtung 2 aufweist, die verdeckt verbaut hinter einem als Stoßfänger 3 ausgebildeten Verkleidungsteil eines Fahrzeugs angeordnet ist. Die Ultraschallsensorvorrichtung 2 ist dabei an einer Innenseite 4 des Stoßfängers 3 befestigt. Insbesondere ist dabei eine Klebung über eine Klebstoffschicht 5 vorgesehen.

Die Ultraschallsensorvorrichtung 2 ist somit frontseitig vollständig durch den Stoßfänger 3 bedeckt, sodass ein Ultraschallsensor 6 der Ultraschallsensorvorrichtung 2 durch den Stoßfänger 3 hindurch sendet und empfängt.

Der Ultraschallsensor 6 umfasst eine Membran 7, die topfförmig ausgebildet ist und beispielsweise aus Aluminium ausgebildet ist.

Die Membran 7 ist radial um die Achse A des Ultraschallsensors 6 mit einem Entkopplungsring 8 umgriffen, der aus einem weich-elastischem Material, beispielsweise Silikon, ausgebildet ist.

Darüber hinaus umfasst die Ultraschallsensorvorrichtung 2 einen Schwingungsbegrenzungsring 9, der einstückig ausgebildet ist und beispielsweise aus Keramik ist. Der Schwingungsbegrenzungsring 9 umgreift sowohl die Membran 7 als auch den Entkopplungsring 8. In der gezeigten Ausführung ist vorgesehen, dass sowohl eine vordere Seite 10 des Schwingungsbegrenzungsrings 9 als auch eine hintere Seite 11 eben ausgebildet sind.

Wesentlich ist, dass eine Außenkontur 13 des Schwingungsbegrenzungsrings 9 eine unterschiedliche Formgebung zu einer zweiten vorderen Innenkontur 14 des Schwingungsbegrenzungsrings 9 aufweist. Eine erste hintere Innenkontur 15, die auf der dem Ultraschallsensor 2 zugewandten hinteren Seite 11 ausgebildet ist, kann im Hinblick auf Ihre Form gleich der Außenkontur 13 sein. Insbesondere ist diese hintere erste Innenkontur 15 an die Außengeometrie des Entkopplungsrings 8 und somit auch an die Außenkontur der Membran 7 des Ultraschallsensors 6 angepasst. Bei der in Fig. 1 gezeigten Ausgestaltung ist die Innenseite 4 an der Anbringungsstelle der Ultraschallsensorvorrichtung 1 ebenfalls eben ausgebildet.

Bei der Ausgestaltung in Fig. 2, die ebenfalls eine Schnittdarstellung eines weiteren Ausführungsbeispiels einer Anordnung 1 zeigt, ist der Stoßfänger gekrümmt ausgebildet und insbesondere auch die Innenseite 4 entsprechend gebogen.

Um auch hier eine vollflächige Befestigung der Ultraschallsensorvorrichtung 2 an der Innenseite 4 erreichen zu können und darüber hinaus in Richtung der Achse A eine möglichst kompakte Bauform der Anordnung 1 zu erreichen, ist die vordere Seite 10 des Schwingungsbegrenzungsrings 9 zumindest bereichsweise geneigt ausgebildet, sodass sich der Schwingungsbegrenzungsring 9 in radialer Richtung nach außen verjüngt.

Der Schwingungsbegrenzungsring 9 weist eine maximale Höhe bzw. Dicke 12 auf, die maximal der Höhe des Entkopplungsrings 8 entspricht.

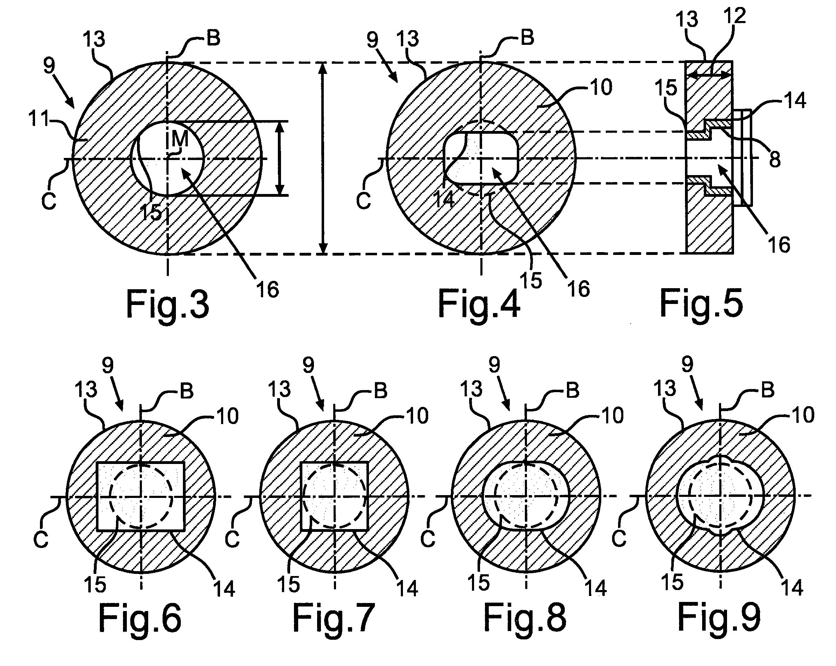

In den Fig. 1 und Fig. 2 nicht detaillierter dargestellt, in den weiteren Fig. 3 bis 5 jedoch näher erläutert ist vorgesehen, dass die Innenkonturen 14 und15 unterschiedlich sind, sodass die gesamte Innenkontur des Schwingungsbegrenzungsrings 9 über diese Dicke 12 variiert.

In Fig. 3 ist ein Ausführungsbeispiel eines Schwingungsbegrenzungsrings 9 mit einer Ansicht auf die hintere Seite 11 gezeigt. Die beiden in der Figurenebene sich erstreckenden senkrecht aufeinanderstehenden Achsen B und C schneiden sich in einem Mittelpunkt M des Schwingungsbegrenzungsrings 9.

Es ist zu erkennen, dass die Außenkontur 13 rotationssymmetrisch ist. Die erste Innenkontur 15 ist ebenfalls rotationssymmetrisch ausgebildet und an die Außengeometrie des Entkopplungsrings 8 angepasst. Es kann somit ein passgenauer Einsatz bzw. ein passgenaues Einführen der Membran 7 mit dem Entkopplungsring 8 in diese durch die Innenkontur 15 begrenzte Öffnung 16 ermöglicht werden.

In Fig. 4 ist eine Ansicht auf die vordere Seite 10 des Schwingungsbegrenzungsrings 9 gezeigt. Es ist zu erkennen, dass die zweite Innenkontur 14 eckenfrei ausgebildet ist, jedoch nur zur rotationssymmetrischen ersten Innenkontur 15 unterschiedlich ist. Diese ist zur Verdeutlichung in Fig. 4 eingezeichnet.

Im Ausführungsbeispiel ist die Innenkontur 14 einerseits symmetrisch zur Achse B andererseits auch symmetrisch zur Achse C ausgebildet. Sie weist jedoch keine Rotationssymmetrie auf.

Gemäß der Darstellung in Fig. 5 ist zu erkennen, dass die Innenkontur über die Dicke 12 variiert und von der ersten Innenkontur 15 in die zweite Innenkontur 14 übergeht, wobei dies im Ausführungsbeispiel durch eine diskrete Stufe der Fall ist.

In Fig. 6 ist ein weiteres Ausführungsbeispiel eines Schwingungsbegrenzungsrings 9 mit einer Sicht auf die vordere Seite 10 gezeigt. Bei dieser Ausgestaltung ist die zweite Innenkontur 14 rechteckig ausgebildet, wobei die angedeutete erste hintere Innenkontur 15 wieder rotationssymmetrisch ist.

In Fig. 7 ist eine weitere Darstellung eines Schwingungsbegrenzungselements 9 gezeigt, wobei ich hier die Draufsicht auf die vordere Seite 10 eine viereckige zweite Innenkontur 14 zeigt, wobei die erste Innenkontur 15 wieder kreisrund ausgebildet ist.

In Fig. 8 ist ein weiteres Ausführungsbeispiel eines Schwingungsbegrenzungsrings 9 gezeigt, wobei hier gemäß der Draufsicht auf die vordere Seite 10 eine weitere eckenfreie zweite Innenkontur 14 und eine kreisrunde erste Innenkontur 15 gezeigt sind.

In der Darstellung gemäß Fig. 9, die eine weitere Draufsicht auf die Vorderseite 10 zeigt, ist vorgesehen, dass die zweite Innenkontur 14 Ausbuchtungen aufweist, die unterschiedliche Radien aufweisen.

Bei allen Ausführungen ist im Ausführungsbeispiel vorgesehen, dass die Außenkontur 13 über die Dicke des Schwingungsbegrenzungsrings 9 gleich ist.

## Patentansprüche

1. Ultraschallsensorvorrichtung (2) für ein Fahrzeug, mit einem Ultraschallsensor (6) und einem den Ultraschallsensor (6) in seiner Schwingungsübertragung begrenzenden Schwingungsbegrenzungsring (9),
**dadurch gekennzeichnet, dass**
der Schwingungsbegrenzungsring (9) eine zu seiner Außenkontur (13) unterschiedliche Formgebung einer vorderen Innenkontur (14) aufweist und der Verlauf der Innenkontur (14, 15) über die Dicke (12) des Schwingungsbegrenzungsrings (9) variiert, wobei die Innenkontur auf einer dem Ultraschallsensor (6) zugewandten hinteren Seite (11) eine der Außengeometrie des Ultraschallsensors (6) angepasste erste hintere Innenkontur (15) aufweist, die über die Dicke (12) des Schwingungsbegrenzungsrings (9) betrachtet in die auf einer vorderen Seite (10) des Schwingungsbegrenzungsrings (9) ausgebildete zweite vordere Innenkontur (14) übergeht, wobei die zweite Innenkontur (14) unterschiedlich zur Außenkontur (13) ist.

2. Ultraschallsensorvorrichtung (2) nach Anspruch 1,
**dadurch gekennzeichnet, dass**
der Schwingungsbegrenzungsring (9) eine eckenfreie vordere Innenkontur (14) aufweist, die unterschiedliche Ausmaße in zwei senkrecht zueinander stehenden Achsen (B, C) aufweist.

3. Ultraschallsensorvorrichtung (2) nach Anspruch 1,
**dadurch gekennzeichnet, dass**
der Schwingungsbegrenzungsring (9) eine eckige vordere Innenkontur (14) aufweist, insbesondere die Innenkontur (14) unterschiedliche Ausmaße in zwei senkrecht zueinander stehenden Achsen (B, C) aufweist.

4. Ultraschallsensorvorrichtung (2) nach Anspruch 3,
**dadurch gekennzeichnet, dass**
die vordere Innenkontur (14) viereckig ist.

5. Ultraschallsensorvorrichtung (2) nach einem der vorhergehenden Ansprüche,
**dadurch gekennzeichnet, dass**
der Schwingungsbegrenzungsring (9) eine kreisrunde Außenkontur (13) aufweist.

6. Ultraschallsensorvorrichtung (2) nach einem der vorhergehenden Ansprüche,
**dadurch gekennzeichnet, dass**
eine hintere Seite (11) des Schwingungsbegrenzungsrings (9) eben ausgebildet ist.

7. Ultraschallsensorvorrichtung (2) nach einem der vorhergehenden Ansprüche,
**dadurch gekennzeichnet, dass**
eine vordere Seite (10) des Schwingungsbegrenzungsrings (9) zumindest teilweise in radialer Richtung geneigt, insbesondere nach außen abfallend ausgebildet ist.

8. Ultraschallsensorvorrichtung (2) nach einem der vorhergehenden Ansprüche,
**dadurch gekennzeichnet, dass**
zwischen dem Schwingungsbegrenzungsring (9) und dem Ultraschallsensor (6) ein Entkopplungsring (8) angeordnet ist.

9. Ultraschallsensorvorrichtung (2) nach einem der vorhergehenden Ansprüche,
**dadurch gekennzeichnet, dass**
der Schwingungsbegrenzungsring (9) aus Keramik ist.

10. Anordnung (1) mit einer Ultraschallsensorvorrichtung (2) nach einem der vorhergehenden Ansprüche, und einem Verkleidungsteil, insbesondere einem Stoßfänger (3), an dessen Innenseite (4) die Ultraschallsensorvorrichtung (2) durch das Verkleidungsteil verdeckt verbaut befestigt ist.

11. Anordnung (1) nach Anspruch 10,
**dadurch gekennzeichnet, dass**
der Schwingungsbegrenzungsring (9) direkt an der Innenseite (4) des Verkleidungsteil (3) befestigt, insbesondere angeklebt, ist.

## Claims

1. Ultrasonic sensor device (2) for a vehicle, including an ultrasonic sensor (6) and an oscillation limiting ring (9) limiting the ultrasonic sensor (6) in its oscillation transmission,
**characterized in that**
the oscillation limiting ring (9) has a shaping of a front inner contour (14) different from its outer contour (13) and the extension of the inner contour (14, 15) varies over the thickness (12) of the oscillation limiting ring (9), wherein the inner contour has a first rear inner contour (15) adapted to the outer geometry of the ultrasonic sensor (6) on a rear side (11) facing the ultrasonic sensor (6), which transitions into the second front inner contour (14) formed on a front side (10) of the oscillation limiting ring (9) viewed over the thickness (12) of the oscillation limiting ring (9), wherein the second inner contour (14) is different from the outer contour (13).

2. Ultrasonic sensor device (2) according to claim 1,
**characterized in that**
the oscillation limiting ring (9) has a corner-free front inner contour (14), which has different dimensions in two axes (B, C) perpendicular to each other.

3. Ultrasonic sensor device (2) according to claim 1,
**characterized in that**
the oscillation limiting ring (9) has a cornered front inner contour (14), in particular the inner contour (14) has different dimensions in two axes (B, C) perpendicular to each other.

4. Ultrasonic sensor device (2) according to claim 3,
**characterized in that**
the front inner contour (14) is quadrangular.

5. Ultrasonic sensor device (2) according to any one of the preceding claims,
**characterized in that**
the oscillation limiting ring (9) has a circular outer contour (13).

6. Ultrasonic sensor device (2) according to any one of the preceding claims,
**characterized in that**
a rear side (11) of the oscillation limiting ring (9) is flatly formed.

7. Ultrasonic sensor device (2) according to any one of the preceding claims,
**characterized in that**
a front side (10) of the oscillation limiting ring (9) is formed at least partially inclined in radial direction, in particular outwards sloping.

8. Ultrasonic sensor device (2) according to any one of the preceding claims,
**characterized in that**
a decoupling ring (8) is disposed between the oscillation limiting ring (9) and the ultrasonic sensor (6).

9. Ultrasonic sensor device (2) according to any one of the preceding claims,
**characterized in that**
the oscillation limiting ring (9) is of ceramic.

10. Assembly (1) including an ultrasonic sensor device (2) according to any one of the preceding claims and a trim part, in particular a bumper (3), to the inner side (4) of which the ultrasonic sensor device (2) is attached installed in a manner covered by the trim part.

11. Assembly (1) according to claim 10,
**characterized in that**
the oscillation limiting ring (9) is directly attached, in particular adhered, to the inner side (4) of the trim part (3).

## Revendications

1. Dispositif formant capteur à ultrasons (2) pour un véhicule, avec un capteur à ultrasons (6) et un anneau de limitation des vibrations (9), limitant le capteur à ultrasons (6) dans sa transmission des vibrations,
**caractérisé en ce que**
l'anneau de limitation des vibrations (9) présente une conformation d'un contour intérieur avant (14) différente de son contour extérieur (13) et que l'évolution du contour intérieur (14, 15) varie sur l'épaisseur (12) de l'anneau de limitation des vibrations (9), le contour intérieur présentant, sur une face arrière (11), tournée vers le capteur à ultrasons (6), un premier contour intérieur arrière (15), adapté à la géométrie extérieure du capteur à ultrasons (6), qui passe, vu au-dessus de l'épaisseur (12) de l'anneau de limitation des vibrations (9), dans le second contour intérieur avant (14), constitué sur une face avant (10) de l'anneau de limitation des vibrations (9), le second contour intérieur (14) étant différent du contour extérieur (13).

2. Dispositif formant capteur à ultrasons (2) selon la revendication 1,
**caractérisé en ce que**
l'anneau de limitation des vibrations (9) présente un contour intérieur avant sans coin (14), qui présente des dimensions différentes dans deux axes (B, C) disposés verticalement l'un par rapport à l'autre.

3. Dispositif formant capteur à ultrasons (2) selon la revendication 1,
**caractérisé en ce que**
l'anneau de limitation des vibrations (9) présente un contour intérieur avant angulaire (14), en particulier que le contour intérieur (14) présente des dimensions différentes dans deux axes (B, C) disposés verticalement l'un par rapport à l'autre.

4. Dispositif formant capteur à ultrasons (2) selon la revendication 3,
**caractérisé en ce que**
le contour intérieur avant (14) est quadrangulaire.

5. Dispositif formant capteur à ultrasons (2) selon l'une des revendications précédentes,
**caractérisé en ce que**
l'anneau de limitation des vibrations (9) présente un contour extérieur circulaire (13).

6. Dispositif formant capteur à ultrasons (2) selon l'une des revendications précédentes,
**caractérisé en ce**
**qu'**une face arrière (11) de l'anneau de limitation des vibrations (9) est constituée de manière plane.

7. Dispositif formant capteur à ultrasons (2) selon l'une des revendications précédentes,
**caractérisé en ce**
**qu'**une face avant (10) de l'anneau de limitation des vibrations (9) est inclinée au moins en partie dans le sens radial, qu'elle est constituée en particulier de manière oblique vers l'extérieur.

8. Dispositif formant capteur à ultrasons (2) selon l'une des revendications précédentes,
**caractérisé en ce**
**qu'**un anneau de découplage (8) est agencé entre l'anneau de limitation des vibrations (9) et le capteur à ultrasons (6).

9. Dispositif formant capteur à ultrasons (2) selon l'une des revendications précédentes,
**caractérisé en ce que**
l'anneau de limitation des vibrations (9) est en céramique.

10. Agencement (1) avec un dispositif formant capteur à ultrasons (2) selon l'une des revendications précédentes et un élément d'habillage, en particulier un pare-chocs (3), sur la face intérieure (4) duquel le dispositif formant capteur à ultrasons (2) est fixé au montage, dissimulé par l'élément d'habillage.

11. Agencement (1) selon la revendication 10,
**caractérisé en ce que**
l'anneau de limitation des vibrations (9) est fixé directement sur la face intérieure (4) de l'élément d'habillage (3), en particulier qu'il est collé.
